(19) Europäisches Patentamt
European Patent Office
Office européen des brevets

(11) **EP 3 046 701 B1**

(12) **EUROPEAN PATENT SPECIFICATION**

(45) Date of publication and mention
of the grant of the patent:
**05.08.2020 Bulletin 2020/32**

(51) Int Cl.:
***B22F 3/105*** *(2006.01)*      ***B33Y 30/00*** *(2015.01)*
*C22C 32/00* *(2006.01)*      *C22C 1/04* *(2006.01)*
*B22F 1/00* *(2006.01)*      *B22F 1/02* *(2006.01)*
*B33Y 70/00* *(2020.01)*      *B33Y 10/00* *(2015.01)*
*C23C 4/04* *(2006.01)*      *C23C 4/06* *(2016.01)*
*C23C 4/10* *(2016.01)*

(21) Application number: **14777748.6**

(22) Date of filing: **16.09.2014**

(86) International application number:
**PCT/GB2014/052802**

(87) International publication number:
**WO 2015/036802 (19.03.2015 Gazette 2015/11)**

(54) **ADDITIVE MANUFACTURING**

ADDITIVE FERTIGUNG

FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2013 GB 201316430**

(43) Date of publication of application:
**27.07.2016 Bulletin 2016/30**

(73) Proprietor: **The University Of Nottingham Nottingham, Nottinghamshire NG7 2RD (GB)**

(72) Inventors:
• **CLARE, Adam**
  **Nottingham NG7 2RD (GB)**
• **KENNEDY, Andrew**
  **Nottingham NG7 2RD (GB)**

(74) Representative: **Barker Brettell LLP**
**100 Hagley Road**
**Edgbaston**
**Birmingham B16 8QQ (GB)**

(56) References cited:
EP-A2- 1 700 686      WO-A1-2014/083277
WO-A1-2015/009639      WO-A2-2015/001241
DE-C1- 10 039 144      US-A1- 2004 009 089
US-A1- 2004 182 202      US-A1- 2006 251 535

• ZHENG B ET AL: "Microstructure and Properties of Laser-Deposited Ti6Al4V Metal Matrix Composites Using Ni-Coated Powder", METALLURGICAL AND MATERIALS TRANSACTIONS A, SPRINGER-VERLAG, NEW YORK, vol. 39, no. 5, 21 March 2008 (2008-03-21) , pages 1196-1205, XP019696270, ISSN: 1543-1940

## Description

The present invention relates to an apparatus for additive layer manufacturing.

Additive layer manufacturing (ALM), often referred to as 3D printing, is a process by which a component is built up by adding successive material layers with a defined shape. In a number of ALM processes, the material layers initially take the form of a powder, which is deposited and then melted or sintered together using a directed heat source, such as a laser or electron beam. Successive layers of metal powder can be deposited and melted or sintered in a defined pattern to produce a three dimensional metal component with substantially arbitrary geometry. Selective laser melting (SLM) is a form of additive layer manufacturing, being a powder bed fused deposition technology which allows solid layers to be created from powder material spread with desired thickness on a substrate platform and consolidated by laser beam irradiation. Different metallic powders such as steel, titanium alloy and nickel alloy amongst others have been processed via SLM technology for potential applications in space, aviation, automotive and other industries.

In an alternative additive manufacturing process, material may be deposited by blowing a powder through a nozzle, through the focal point of a high power laser, thereby directly writing a metal.

In some additive manufacturing processes, a cold spray technique may be used, in which solid powders are impacted on a substrate, to which they subsequently adhere. The particles may impact the substrate at high velocity, so that the particles plastically deform on impact. The particles may be entrained in a high speed flow of gas, which may be pre-heated to soften the solid powder. Laser assisted cold spray may be used, in which a laser is used to heat the sprayed powder to soften it prior to impact. A radiation source (such as a laser) may be used to improve consolidation of a cold sprayed coating (or portion) after deposition.

Additive manufacturing processes have the potential to provide high production rates, short production time, high part accuracy, and the ability to produce intricate and complex functional structures which cannot be achieved via conventional manufacturing processes.

A number of problems exist in prior methods of additive manufacturing. One problem is that of reflectivity of the powder. Where the powder is a metal there may be a high degree of reflectivity to the directed heat source. Aluminium, for example, is highly reflective at a broad spectrum of wavelengths (including IR wavelengths), and can therefore be relatively difficult to melt using a laser (such as a $CO_2$ laser).

In prior art metal additive manufacturing, the input powder (or feedstock) typically comprises pre-alloyed particles of the chosen metal alloy with a relatively narrow size distribution. The size of the metal particles is typically selected to provide good flowability of the powder, and the process of ALM may be optimised to achieve acceptable quality based on a relatively specific size of particle. The need to used pre-alloyed powders means that it is relatively difficult to change the material type used in ALM, since it is necessary to procure a new batch of feedstock powder when a new alloy composition is required. Lead times and minimum order quantities for pre-alloyed feedstock powder make it unattractive to modify material (e.g. alloy) composition, which is in contrast to the high degree of flexibility that is otherwise provided by additive manufacturing technologies.

Metal Matrix Composites (MMCs) are produced from metals and ceramics to obtain a material with desirable combination of thermo-mechanical properties such as high modulus, strength, low coefficient of thermal expansion (CTE), high wear and corrosion resistance. MMCs are categorised into either continuously or discontinuously reinforced type. Discontinuously reinforced MMCs (DRMMCs) are produced by the addition of ceramic particles or whiskers, or by in-situ synthesis of the particles/whiskers in a metal matrix during manufacturing. The particles or whiskers strengthen the metal substantially isotropically. Powder metallurgy has hitherto been the most common manufacturing route for production of DRMMC functional components. Unfortunately, powder metallurgy requires numerous production steps, which results in increased manufacturing cost and this has prevented widespread adoption of MMC components. However, the use of additive manufacturing technique for the production of MMCs is promising, offering the potential to address at least some of these problems.

One promising composite material is titanium boride reinforced titanium alloy. Titanium and its alloys are well known for their good corrosion resistance and high strength to weight ratio, but their stiffness, wear resistance and high temperature properties (e.g. above 400°C) can be enhanced by the addition of ceramic particles or whiskers embedded in the metal matrix. A suitable ceramic particle for reinforcing titanium and its alloys is TiB2 owing to its unique properties and also because TiB whiskers can be synthesised in-situ in Ti alloys. TiB is most chemically stable in Ti alloys and the TiB whisker/matrix interface is devoid of intermetallics or reaction layer that can prohibit effective load transfer from matrix to the reinforcing whiskers. Having a uniform distribution of TiB whiskers in the Ti matrix results in improved isotropy for the resulting composite material.

There is therefore a need for feedstock for additive manufacturing processes which can be tailored toward achieving a homogenous distribution of TiB2 particles/in-situ synthesis of TiB whiskers in Ti alloy matrix. Such feedstock should be suitable for additive manufacturing processes including both blown powder and powder bed systems, which are capable of producing dense and near net shape components.

More broadly, it is desirable to be able to create micro-structured (or nano-structured) composites (such as MMCs) with good material properties. It can be difficult to combine powders of different materials, particularly where particle sizes are different, while maintaining a homogeneous and flowable powder mixture.

It is an object of the present invention to overcome at least some of the above mentioned problems.

US 2004/009,089 (A1) discloses a green article comprising an A-B powder mixture and methods of manufacturing such green articles and corresponding sintered articles. The A-B powder mixture consists of a minor volume fraction of a relatively fine powder A and a complementary major volume fraction of a relatively coarse prealloyed powder B wherein the A-B powder mean particle size ratio is at least about 1:5. Metal powder A consists of one or more elemental metals or alloys which has a melting or solidus temperature above the highest sintering temperature at which the A-B powder mixture may be sintered without slumping. Prealloyed metal powder B consists of one or more alloys which are amenable to supersolidus liquid phase sintering. Green articles made from the A-B powder disclosed therein may have a wider sintering temperature window than do articles made from prealloyed metal powder B alone.

US 2004/182,202 (A1) discloses a powder blend for use in laser sintering and a method for forming tough, strong, wear-resistant, corrosion-resistant infiltrated metal products. The powder blend comprises a steel alloy, a polymeric binder and a high melting temperature fine particulate which are blended together, then applied layer by layer to a working surface in a laser sintering system, exposed a layer at a time to fuse together the powder until a green part of high strength is formed, and then the green part is infiltrated with a metal infiltrant in a non-reducing gas atmosphere at an effective temperature for an effective period of time.

EP 1,700,686 (A2) discloses a method and apparatus for forming three-dimensional objects by laser sintering that includes the use of dense phase pneumatic conveying to internally recycle overflow powder, and to thoroughly blend overflow, recovered and virgin powder to provide a consistent powder feed mix to a laser sintering machine. Overflow powder from the laser sintering machine is recovered and recycled back into the laser sintering machine for reuse. The approach disclosed therein may result in a compact and reliable powder recycle system with complete blending and minimum attrition to the handled powder.

According to the present invention, there is provided an additive manufacturing tool according to claim 1. Optional features of the tool are set out in the dependent claims.

According to a first aspect of the present disclosure, not part of the invention, there is provided a powder for use in additive manufacturing, comprising: a first particulate component with a first mean particle diameter, and a second particulate component with a second mean particle diameter; wherein the first mean particle diameter is at least twice the second mean particle diameter; and the particles of the second component are bonded (or satellited) to the particles of the first component.

In this specification, particle diameter means the volume based particle size, and refers to the diameter of a sphere that has the same volume as the particle. Reference to a median particle diameter refers to the value of particle diameter at which half of the population of particles have a larger particle diameter, and half have a smaller diameter. Reference to a mean particle diameter of a particular component or powder refers to the average on a volume basis according to the following formula:

$$d_{43} = \frac{\sum_{i=1}^{n} d_i^{\,4}}{\sum_{i=1}^{n} d_i^{\,3}}$$

where $d_{43}$ is the mean particle diameter of that component or powder, and $d_i$ is the particle size of each particle $i$ of that component or powder. This type of mean particle diameter can be found any suitable technique, such as optical diffraction (e.g. laser diffraction).

Bonding smaller particles to larger particles in this way may allow the surface properties of the larger particles to be modified to improve their properties for additive manufacturing. Satellited powders according to the disclosure, not part of the invention, can be used to address a number of the problems outlined hereinbefore. For example, the surface roughness of the larger composite two-component particles may be tailored by controlling the process. The particle size distribution of the second component may be selected to provide a specific surface roughness for the powder. Increasing the surface roughness may reduce the specular reflectivity of the surface, thereby improving the reflectivity of the powder and making it easier to melt.

A powder according to the disclosure, not part of the invention, can be used to reduce the reflectivity of a powdered material. Coating a substantially spherical particle with a plurality of smaller particles may reduce the effective reflectivity of the surface of the particles. The smaller particles may, for instance, be selected to enhance heat absorption.

The first and second components preferably comprise different materials, but this is not essential. The first component may consist of a first material, and the second component may consist of a second material. Alternatively, the first component may consist of a first material, and the second component may comprise a plurality of different materials, so that some of the particles of the second component consist of a different material to other particles of the second component. The second component may comprise an arbitrary number of different types of particle, each with different materials and/or morphology. The first and second component can thereby be: chemically identical; morphologically identical (but having different size); chemically different (different alloys or elemental); morphologically different (i.e spherical particles bonded to angular particles and vice versa).

Powders according to the first aspect of the disclosure, not part of the invention, allow heterogeneous particles to be combined without compromising the suitability of the combined powder for additive manufacturing processes. For example, it may be desirable to combine a small quantity of a second material to a first material, for example to produce an alloy or a composite material. Alloying additives are typically included in small quantities (for example less than 10% by volume). In order to provide a uniform distribution of the additive through the powder, it might be desirable to use a small particle size for the second material. Blending together two different particle sizes, which may have different densities and surface properties, is challenging. It may, for instance, be difficult to prevent some degree of segregation of the different particle types during processing or indeed during transport. A powder according to the present disclosure, in which the second component is bonded to the first component, substantially overcomes a number of problems that may occur in the preparation of multicomponent powder mixtures for additive manufacturing and alloying within additive manufacturing processes. A powder according to the first aspect of the disclosure may be more resistant to settling, resulting in segregation of different types of particle (e.g. by size or density) during transport. Powders according to the first aspect of the disclosure may facilitate rapid, cheap preparation of customised feedstock powders for additive layer manufacturing processes.

Examples according to the first aspect of the disclosure facilitate small batches of feedstock with customised properties, thereby enabling graduated coatings or layers, including interface bands, to be created.

The bulk composition of the melted or sintered composite may be controlled. The proportions of the first and second component can be varied, thereby controlling the composition of the powder, and of any part made using the powder by additive manufacturing. In some examples, not part of the invention, the powder may comprise a mix of satellited and un-satellited particles. The proportions of satellited and un-satellited particles may be controlled to control the proportions of a first and second material in the powder. For example, the un-satellited particles may consist of a first material, and the satellited particles may consist of a first component that is the first material, and a second component that is a second material. A relatively high proportion of the second material may be used in the satellited particles, so that a range of desirable proportions of materials in the powder can be achieved by varying the proportions of satellited and un-satellited particles. A powder may be prepared by mixing pre-satellited particles with un-satellited particles.

The first component may comprise a metal.

The second component may comprise at least one material selected to alloy with the first component when the powder is melted. This enables an enhanced degree of flexibility of material selection in additive manufacture. Previously, it would be necessary to prepare a pre-alloyed metal powder with the appropriate particle morphology for additive manufacture. Examples according to the present disclosure, not part of the invention, allow a suitable alloy to be prepared from the powders comprising the required constituent materials, by satelliting the main component with appropriate quantities of alloying material.

The first component may comprise aluminium, and the second component may comprise at least one material selected from the group of: copper, silicon, magnesium, zinc and tin. An aluminium alloy of a 2XXX or 7XXX type may thereby be produced. The ability to flexibly select a material for the second component that is different from the first component allows powders to be prepared that will produce alloys during additive manufacturing with a high degree of control and flexibility. The material of the second component, and the relative proportions of the first and second component can be selected to provide tailored material properties, without the long lead time and expense that would previously have been associated with a change in feedstock material. Furthermore, according to some examples, not part of the invention, the powder may be prepared as it is deposited in an additive layer manufacturing process, and the constituent materials (and/or the relative proportions) of the second (or first) powder may be varied, for example to produce a functionally graded material, in which the material properties of a part are varied as a function of location within the part.

The first component may comprise titanium, and the second component may comprise at least one material selected from the group of: aluminium, vanadium, tin, nickel and palladium. Titanium alloys can similarly be used in additive manufacture using the powder according to the disclosure, not part of the invention. Pure titanium may be more readily weldable than a titanium alloy, such as Ti-6A1-4V alloy, and it may be easier to melt a satellited particle that alloys in-situ than a pre-alloyed feedstock powder.

The first or second component may comprise at least one of a ceramic material, a polymeric or plastics material, or a semiconductor material. A very broad range of materials can be combined in a powder according to the first aspect of the disclosure. Metal matrix composite materials with tailored microstructures can readily be created by the addition of a suitable ceramic material, as will be explained in more detail with reference to examples described below. The second component may comprise a ceramic material, and the first component may comprise a metal material. The materials of the first and second component may be selected to form a metal matrix composite when the powder is melted. The first component may comprise titanium, and the second component may comprise titanium diboride. The applicant has found that titanium matrix materials with very promising properties having titanium boride reinforcing whiskers can thereby be produced.

At least some of the particles of the first and second components may be adhered together using a binder material. A binder material is a convenient way of adhering the first and second components together, but any suitable means can be used, including cold welding, electrostatic attraction, and intermolecular forces (such as Van der Waals forces).

The ratio of the first mean particle diameter and second mean particle diameter may be selected from: at least 3, at least 5, at least 10, at least 20, at least 50, at least 100, and at least 500. The ratio may lie in a range defined by any of the points specified above, or between at least 2 and any of the points specified above.

The first mean particle diameter may be in the range of $5\mu m$ to $1000\mu m$, or $5\mu m$ and above.

The second mean particle diameter may be in the range of $0.5\mu m$ to $100\mu m$, or $5\mu m$ and above.

The first mean particle diameter may be between $25\mu m$ and $250\mu m$, and the second mean particle diameter is between $0.25\mu m$ and $5\mu m$.

According to a second aspect of the disclosure, not part of the invention, there is provided a method of producing a powder, comprising: blending a first source powder comprising a first particulate component with a second source powder comprising a second particulate component, such that the first and second particulate component bond together, wherein the first and second particulate component comprise different materials, and a mean particle diameter of the first component is at least twice a mean particle diameter of the second component

The method may include adding a binder material to promote bonding between the first and second component during blending. Preferably a small amount of binder material is used, so as to reduce contamination by the binder. Preferably the binder is an organic material, and/or a material selected to be ablated away by the heat source during additive manufacturing.

The method may include drying the blended powder.

The method may comprise selecting a particle size of the first and second source powder so as to achieve a desired ratio of the materials of the first and second components in the blended and bonded powder. The ratio may be a mass ratio, or a volume ratio, or some other property ratio.

The method may comprise sieving or otherwise segregating particles from the blended and bonded powder to remove excess particles of the second source powder that have not bonded with the first component.

The powder may be according to the first aspect of the disclosure.

A batch size of powder manufactured according to the second aspect of the disclosure may be less than 1kg. A batch size of power may be less than a mass selected from the group of: 100kg, 50kg, 10kg, 5kg, 2kg, 0.5kg, 0.1kg and 0.05kg.

The method may comprise producing a batch of powder with at least one specific property in response to a request for a powder with the at least one specific property.

According to a first aspect of the present invention, there is provided an additive manufacturing tool, comprising: a first powder holder, a second powder holder; a blender, operable to blend a first powder material from the first powder holder and a second powder material from the second powder holder to form a feedstock powder; wherein

i) the feedstock powder comprises a first particulate component with a first mean particle diameter, and a second particulate component with a second mean particle diameter, wherein the first mean particle diameter is at least twice the second mean particle diameter, and the particles of the second component are bonded to the particles of the first component with a binder material to form a flowable power, and

ii) the blender comprises a binder dispenser for adding the binder material to the powder, and a dryer for drying the powder to form the feedstock powder; and

a dispenser, wherein the dispenser is operable to dispense the feedstock powder.

The dispenser may be operable to dispense the feedstock powder to form a part by additive manufacturing.

The tool may further comprise a directed heat source. The directed heat source may be operable to sinter or melt the feedstock powder to form the part.

Forming a part may comprise adding a coating to a part.

The dispenser may comprise a cold spray deposition device, operable to form a part by impacting the powder on a surface. The directed heat source may be operable to soften the power prior to impacting on the surface.

The first powder material may comprise a powder according to the first aspect of the disclosure, not part of the invention, and the second powder material may comprise an un-satellited powder.

The blender may be operable to bond particles of the first powder with a particles of the second powder, thereby forming a powder according to the first aspect of the disclosure, which is not part of the invention.

The further powder holder may comprise at least one container, and the blender may be configured to blend material from the powder holder and one or more selected containers of the further powder holder, so as to form a blended and bonded powder with selectable proportions of different materials.

The tool may be configured to form blended and bonded powder as required by the dispenser and directed heat source.

The tool may be operable to produce a part with a first region having a first material composition, and a second region having a different material composition, by varying the proportions of the materials in the blended and bonded powder during production of the part.

According to a third aspect of the disclosure, not part of the invention, a method of using the powder according to the first aspect of the disclosure is provided, comprising performing additive manufacturing.

The additive manufacturing may comprise sintering or melting the powder.

The additive manufacturing may comprise cold spraying the powder. In some examples, not part of the invention, cold spraying may not comprise melting the powder. In some examples, not part of the invention, the cold sprayed powder may be at least partially melted after the powder has been deposited (for instance by directed radiation, e.g. laser consolidation).

The use of a powder in accordance with the first aspect of the disclosure may enable the deposition of materials on new substrates, polymers and polymer composites, which were previously impractical or uneconomic.

The method may comprise coating a plastics material part with a powder according to the first aspect of the disclosure using a cold spray technique. The powder may comprise a polymeric material. The method may comprise forming a surface coating on a composite part comprising a fibre reinforced polymeric matrix. The part may be for use in an aerospace application.

The method may comprise using the tool according to the first aspect of the present invention.

The method may comprise forming a part with a first region having a first material composition, and a second region having a different material composition, by varying the proportions of the materials in the powder during production of the part. This may result in a part with a functionally graded material. In the case of additive layer manufacturing, the composition of successive layers may be adjusted. In the case of blown powder additive manufacture, the composition of the powder may be adjusted continuously as the material is deposited, or discontinuously.

The proportions of materials in the powder may be varied by blending together the powder with a further powder that is not according to the first aspect of the disclosure. In other words, the composition can be varied by blending together un-satellited powder with satellited powder, as already explained. Alternatively, the proportion of satelliting powder that is added may be varied, or some combination of these two approaches may be used.

The powder may be taken from a pre-blended stored powder, or may be produced as it is consumed (on the fly).

According to a fourth aspect of the disclosure, not part of the invention, there is provided a part comprising a region formed using the method according to the third aspect of the disclosure. In some examples, not part of the invention, the region will encompass the entire part. In other examples, not part of the invention, the additive manufacturing process may be used to add material to a part that has already been produced, for instance to provide a hard wearing surface.

The part may be for use in an oil and gas application, for example in a downhole environment.

The region formed according to the third aspect of the disclosure may comprise an coating with predetermined wear rate. The wear rate of the coating may be adjustable by varying the composition of the feedstock powder.

The part may be an aerospace part. The part may be for use on an aircraft or spacecraft.

The present disclosures, not part of the invention, and the invention will now be described, by way of example, with reference to the accompanying drawings, in which:

    **Figure 1** is a schematic of a particle of a powder according to an example of the first aspect of the disclosure;

    **Figure 2** is a scanning electron micrograph (SEM) of a powder according to an example of the first aspect of the disclosure;

    **Figure 3** is a graph showing particle size distribution for a powder according to an example of the first aspect of the disclosure;

    **Figure 4** is a set of four SEMs showing two different regions of a part according to a first example of a fourth aspect of the disclosure, each region being shown at two different levels of magnification;

    **Figure 5** is an SEM of a partially transformed particle of the second component in the part according to the first example of the fourth aspect of the disclosure;

    **Figure 6** is an SEM produced using back scattered electrons (BSE) showing the formation of TiB needles in the part according to the first example of the fourth aspect of the disclosure;

    **Figure 7** is a pair of SEMs, at different magnifications, of a "pull-out" particle of the part according to the first example of the fourth aspect of the disclosure, showing basket weave type microstructure;

    **Figure 8** is a set of four SEMs of a part according to a second example of the fourth aspect of the disclosure, showing microstructural features of the part; and

    **Figure 9** is a schematic diagram of a additive manufacturing tool according to an embodiment of the first aspect of the present invention.

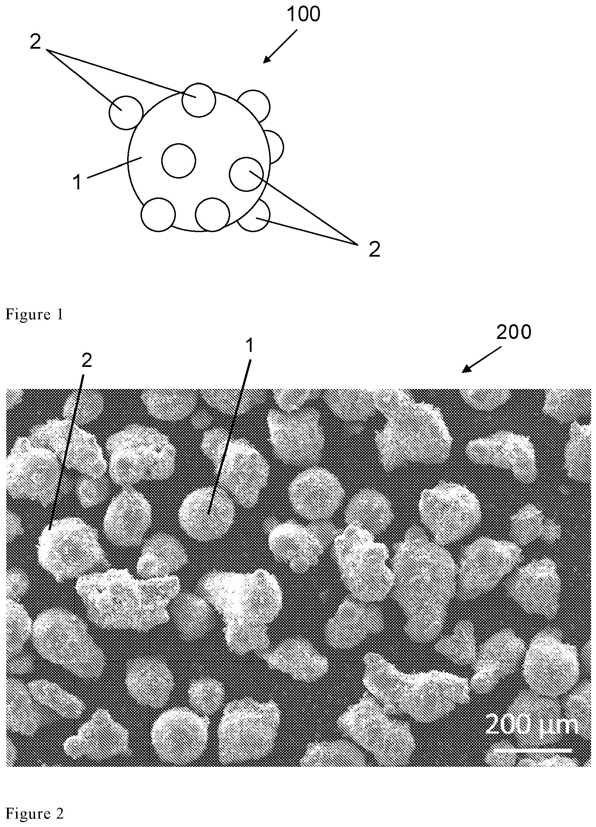

Referring to Figure 1, a particle 100 of a powder according to an example of the first aspect of the disclosure is shown. The particle 100 comprises a first particle 1, to which are bonded a plurality of smaller particles 2. To put it another way, the first particle 1 is satellited by a plurality of smaller particles 2. The particle 100 is thereby a satellited particle, consisting of a first component 1 and a second component 2. The first component of the particle 100 is the first particle 1, and the second component is the plurality of smaller particles 2 bonded to the first component. The material of the larger particle 1 is different from that of the smaller particle 2. In one example, not part of the invention, the larger particle 1 may comprise a metal such as titanium (or an alloy thereof), and the smaller particles 2 may comprise a ceramic such as titanium diboride. The larger particle 1 may be formed from Ti-6A1-4V, and the smaller particle 2 may be TiB2.

Alternatively, the larger particle 1 may comprise a metal such as aluminium, and the smaller particles 2 may comprise an alloying additive, such as copper. Any materials that are suitable for additive manufacturing from a powder form may be combined in this way, and it will be understood that the disclosure is not limited to metals. For instance, the larger particle 1 may comprise a plastics material.

Combining materials in this way, by bonding (or satelliting) smaller particles 2 comprising a second material to larger particles 1 comprising a first material, enables particles with different sizes and properties to be combined without compromising homogeneity or flowability of the resulting powder.

Referring to Figure 2, the SEM shows a powder 200 comprising particles of the type schematically represented in Figure 1. In Figure 2 the larger Ti-6A1-4V powder particles 1 can be seen surrounded by the much smaller TiB2 particles 2, which appear lighter in colour. The first component of the powder in this example, not part of the invention, are relatively large Ti-6A1-4V particles 1, which have been satellited with the second component 2, consisting of TiB2 particles with a relatively small diameter. In the example of Figure 2, the TiB2 particles 2 were bonded to the titanium alloy particles 1 using a binder material. In this case, the binder material was 2.7 volume % poly vinyl alcohol (PVA) solution in water which was sprayed as an aerosol on a pre-blended mixture of the powder.

In the example shown in Figure 2, having wet the powder with the PVA solution, it was thoroughly mixed to avoid agglomeration of the mixed powder. Following a drying process, it was found that the first and second component 1,2 adhere together sufficiently well that they remain substantially adhered during powder feeding associated with additive manufacturing processes, and will remain adhered during a transportation process (e.g. road/rail/air).

The second component 2 of the powder 200 may be bonded to the first component 1 using any suitable technique. For example, other binder materials could be used, or the first and second component 1,2 could be bonded together without the use of a binding agent, for example by cold welding, intermolecular forces and/or electrostatic attraction. Note that the powder 200 need not consist wholly of satellited particles. In some example, not part of the invention, the powder 200 may comprise a mix of satellited particles and not satellited particles.

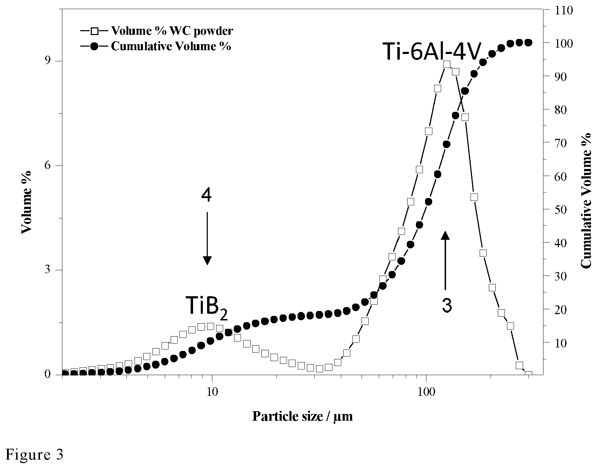

Figure 3 shows the particle size distribution of the powder 200 of Figure 2 as a fraction of the volume of the powder, obtained by X ray diffraction. A first size distribution 3 can be identified, associated with the first component 1 of the powder 200, and a second size distribution 4 can be identified, associated with the second component 2 of the powder 200. In this example, not part of the invention, the first component 1 (Ti-6A1-4V) has a mean particle diameter in the region of 100$\mu$m, and the second component 2 (TiB2) has a mean particle size in the region of 10$\mu$m. The ratio of the mean particle diameter of the first and second component 1, 2 is thereby approximately ten.

The applicant has found, in contrast to mixed unsatellited powders, that powders according to examples of the disclosure, not part of the invention, maintain sufficient sphericity to exhibit acceptable levels of flowability, packing density and homogeneity in use. Sufficient packing density for additive manufacturing of dense parts can be achieved.

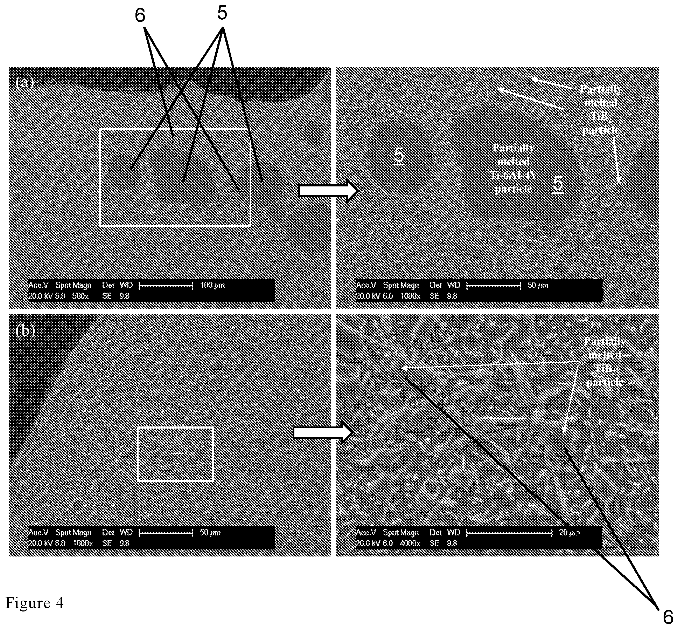

Referring to Figure 4, the microstructure of a part according to a first example of the fourth aspect of the disclosure is shown. In this case, the part was produced by blown powder deposition, in which a powder according to the first aspect was blown through the focal region of a laser beam, so as to melt the powder to form a solid part. A 2 kW Ytterbium-doped, CW fibre laser operating at 1.07 $\mu$m wavelength coupled with a beam delivery system comprising (125 mm collimating lens and a 200 mm focussing lens was used (Precitec YC 50 cladding head). The laser beam was de-focussed to give a Gaussian beam profile with a circular spot size of 3.1 mm for the feedstock processing. The laser system was mounted on a 4 axis computer numerically controlled (CNC) table to traverse the work piece while the laser beam is kept stationary. The powder feedstock was steadily delivered by a Model 1264 powder feeder (Praxair Surface Technologies) into the 3.1 mm circular diameter melt pool through a side feeding nozzle inclined at angle of 23o to the laser beam axis. Ti-6A1-4V rectangular plates with dimensions 180 x 100 x 5 mm were used as substrate and this was grit-blasted and cleaned with acetone prior to the deposition process. A flexible chamber was used to isolate the deposition work space and the work space was flushed with argon, Ar, for 10 minutes prior to the start of deposition and continuously flushed during the experiment at 30 litres.min-1 flow rate.

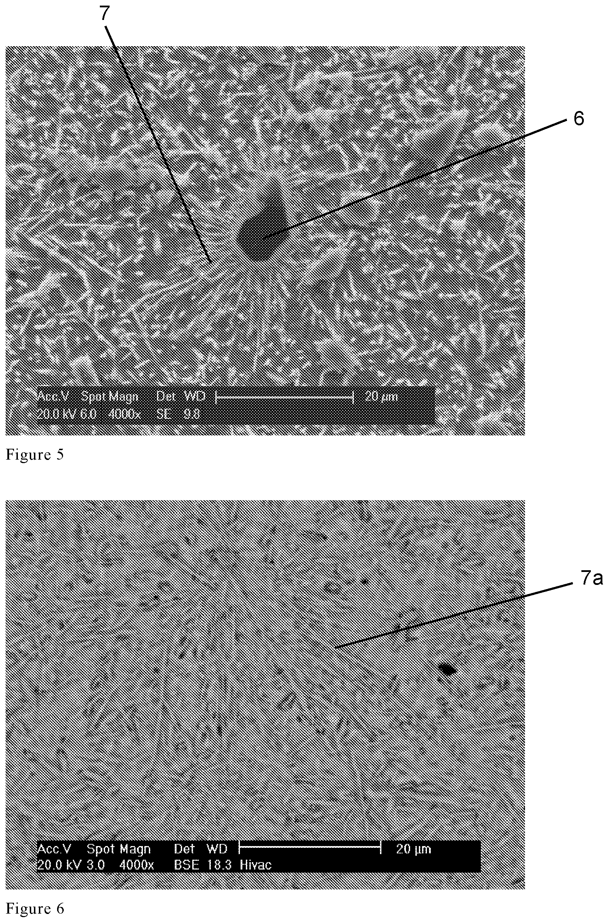

It will be appreciated that the specifics of the additive manufacturing process are merely illustrative, and that any suitable additive manufacturing process may be used to form a part using a powder according to the disclosure, not part of the invention. Figure 4 shows the top and side sections of the TiB2/Ti-6A1-4V composite bead produced by the blown powder process using laser power of 1400 W, 200 mm/min traverse speed, and powder flow rate of 10 g/min. Partially melted Ti-6A1-4V particles 5 can be seen in the composite matrix as shown in Figure 4 (a) and these particles 5 were observed to have an acicular $\alpha$ (transformed $\beta$) martensitic structure. Significant numbers of partially melted and partially transformed TiB2 particles 6 were observed in the composite bead periphery region as shown in Figure 4 (b). The dark grey TiB2 particles 6 were observed to possess light grey edges indicative of solid state transformation due to boron diffusion during processing, and tiny rods characterised as TiB whiskers were found to grow from the TiB2 particles. Figure 5 shows a SEM image of a partially transformed TiB2 particle 6 with a light grey edge and a radial array of light grey TiB whiskers 7 growing from the particle surface in all directions into the composite matrix. The growth directions may correspond with paths along which boron atoms diffuse out of the particle surface as it experiences laser irradiation. The TiB2 particles 6 are decomposed into TiB plates or whiskers 7 either by partial or complete particle melting or solid state boron diffusion into the molten Ti pool.

Owing to the Gaussian distribution of laser beam energy, a near complete transformation of the TiB2 particles 6 present in the central region of the composite bead is to be expected, consistent with the high aspect ratio TiB whiskers 7a that can be observed in the central region of the composite bead that is shown in Figure 6. The central region was found to possess both short whiskers (< 3 $\mu$m length) and long whiskers 7a (~70 $\mu$m) while the majority of the whiskers were of length $\leq$ 40 $\mu$m.

The TiB whiskers 7 were observed to be randomly oriented and interlinked in the composite bead which can be attributed to the growth of TiB needles 7 in all directions from the evenly distributed TiB2 particles 6 in the feedstock.

Some of the interwoven whiskers 7 were observed to be hollow, and these may be filled with Ti. Such filled, hollow whiskers 7 may be advantageous to improve hardness, fracture toughness and wear resistance.

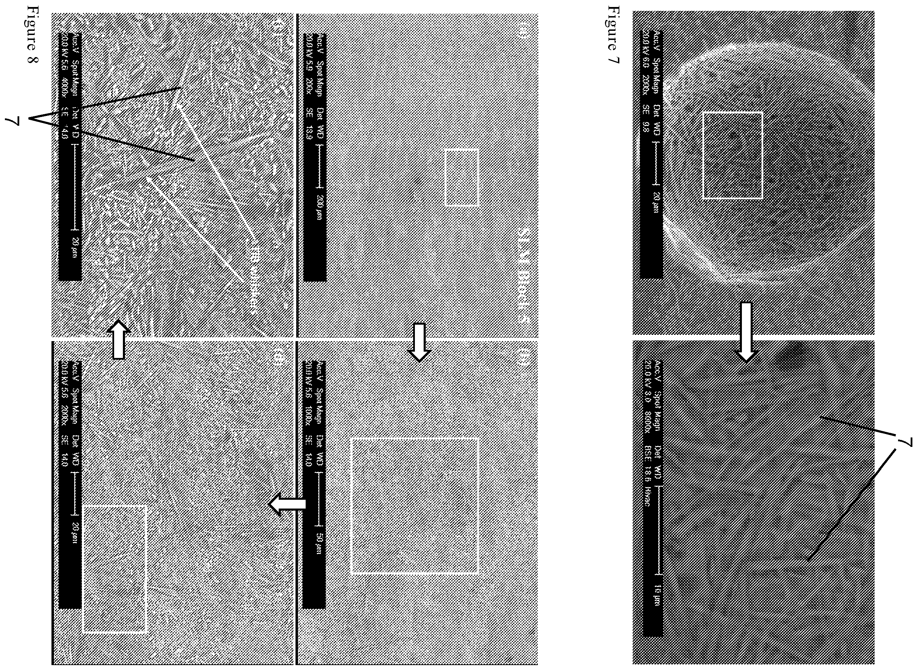

A partially melted particle pull out is shown in Figure 7, on which can be seen a basket-weave microstructure, with a tight 3D network of TiB whiskers 7, randomly interwoven. The exposure of this hemispherical pocket with a basket-weave network of TiB whiskers 7 suggests that the entire composite part consists of matrix reinforced by interwoven high aspect ratio TiB whiskers 7. The interwoven and random orientation of the TiB whiskers is again at least partly attributable to the uniform distribution of small TiB2 particles throughout the part, which have decomposed into uniformly tangled TiB whiskers 7. This random orientation is likely to increase the degree of isotropy of the part.

Referring to Figure 8, a number of views of a second example of a part according to the fourth aspect of the disclosure is shown. This part was produced using an additive layer manufacturing process, employing selective laser melting (using a Realizer SLM50). The SLM50 is equipped with a 100 W Ytterbium-doped, fibre laser (IPG Laser), operating at 1.07 $\mu$m wavelength and delivers a 15 $\mu$m diameter circular spot at focus. Due to the manner in which powder is deposited in this technique (using a recoater mechanism) flowability and packing density are important factors in ensuring good build quality which is enhanced by the method of material preparation.

This second example of the fourth aspect of the disclosure was manufactured from feedstock powder 200 according to the first aspect of the disclosure. The second component 2 of the feedstock powder 200 was again a TiB2 powder with a mean particle diameter of approximately 10 $\mu$m. The first component 1 was a Ti-6A1-4V powder with a particle size range of 15-45 $\mu$m. Consolidated single scan vector walls were first realised and 5 x 5 x 5 mm cubes were built on a Ti-6A1-4V working platform using a cross hatching technique with a zigzag scan vector strategy.

The cubes were built on a 70 mm diameter Ti-6A1-4V platform which was maintained at 200oC preheating temperature, in an argon flushed chamber. A maximum output laser power of 100 W was employed, and a powder bed layer thickness of 25 $\mu$m was used.

Figure 8 (a) is a low magnification micrograph of the x-z plane of SLM block processed with laser power of 100 W, scanning speed of 1200 mm/min and hatch spacing of 0.2 mm, which shows a wavy morphology indicative of the cross hatching technique with the zigzag scan vector strategy employed to produce the composite block. At higher magnification (Figure 8 (c & d)), TiB whiskers 7, which were the product of TiB2 reactive decomposition, were observed in the composite matrix. The whiskers 7 were randomly oriented in the composite matrix with lower aspect ratio when compared to aspect ratio of whiskers 7 in composite obtained from blown powder process. The composite matrix is dominated by short whiskers (< 10 $\mu$m) with some few whiskers observed to be of length 20 - 25 $\mu$m. The maximum length of most TiB whiskers is limited by the thickness of the successive powder layers used to build up the part. In this example, not part of the invention, the TiB whiskers were limited to up to about 25 $\mu$m lengths, since, the powder slice layer thickness used was 25 $\mu$m. The TiB whiskers were interlinked and it is anticipated that the whiskers would be interwoven into a basket-weave type of microstructure as observed in the blown powder composite sample shown in Figures 4 to 7.

The hardness values of sample parts produced by both SLM additive layer manufacturing and by blown powder additive manufacturing were assessed. Vickers hardness tests were conducted using a load of 300 gf (2.94N) and a loading time of 15 s. It was found that the beads produced by blown powder additive manufacturing onto a Ti-6A1-4V substrate (illustrated in Figures 4 to 7) have varying hardness, depending on the location within the bead. A top region of the bead was found to have a somewhat variable mean hardness value in the range 490-590 HV0.3. Within the bead the hardness was more uniform, being 440-480 HV0.3 A transition of hardness to values of less than 400 HV0.3 was observed as indents were made in the heat affected zone in the Ti-6A1-4V substrate under the bead. The heat affected zone was less than 0.5mm deep. It is thought that the variable hardness in the top region may be due to particles of partially transformed TiB2.

Hardness values were evaluated in the same way for parts produced by SLM, and the mean hardness was found to vary in the range 440-503 HV0.3. Some dependence on the process parameters for both manufacturing processes were found. In the blown powder process (a part from which is shown in Figure 8), higher hardness was associated with increasing laser power. In the SLM process, higher hardness was associated with reducing scanning speed. Both these process parameters affect the volumetric energy density received by the powder during processing, with increasing levels of volumetric energy density tending to lead to increased hardness.

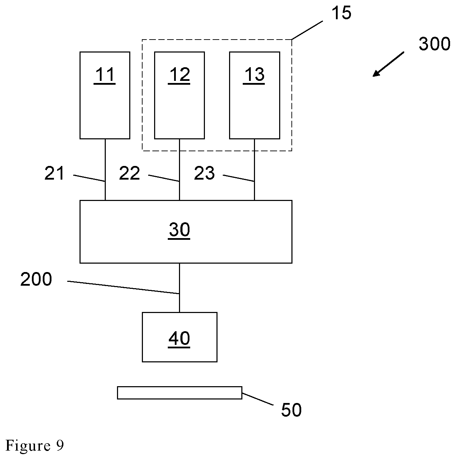

Figure 9 shows a schematic of an additive manufacturing tool 300 according to an embodiment of the first aspect of the present invention. The tool 300 comprises a first powder holder 11, a second powder holder 15, a blender 30, and a dispenser and directed heat source 40.

The first powder holder 11 is for storing a powder consisting of the first particulate component. The second powder holder 15 is for storing at least one powder for use as the second particulate component, as required by the tool. In this embodiment the second powder holder 15 comprises a first container 12 and a second container 13. The first and second containers 12, 13 may be used to store different powders, so that the composition of the second component 2 of the feedstock to the blender 30 can be varied by the tool 300. The first and second powder holders 11, 15 are configured to dispense the respective powders stored therein to the blender 30. Any suitable arrangement can be used to achieve this, such as a screw type dispenser.

The powders 21, 22, 23 dispensed from the first and second powder holders 11, 15 are received by the blender 30, which is operable to blend the powders together so that they bond, so as to form a satellited powder 200. Preferably, the blender 30 may comprise means for adding a binding agent, and drying the blended and bonded powder 200. The tool 300 is operable to produce a powder 200 according to the first aspect of the disclosure as the output of the blender 30. The blender 30 comprises a dispenser for transferring the powder 200 to the dispenser and directed heat source 40. The directed heat source may comprise any suitable heat source, such as a laser or electron beam. The dispenser and directed heat source may be configured to deposit successive layers of the powder 200, and to produce a solid part 50 by selectively sintering or melting regions of each successive layer. The dispenser and directed heat source alternatively or additionally may be configured for blown powder additive manufacturing, in which the powder 200 is blown through a region that is heated by the directed heat source, such that the powder 200 melts and is deposited, thereby forming a part 50.

The tool 300 be operable to produce powder 200 in relatively small quantities, as required by the dispenser and directed heat source 40. The composition of the powder 200 may be readily be varied between batches, for instance allowing different layers of powder 200 to have a different composition, thereby enabling parts to be produced comprising functionally graded materials. Alternatively, the composition of the powder may be varied between producing parts, so that a material composition of each part produced by the tool 300 can conveniently be selected, without the need to procure a different feedstock powder.

The various elements of the tool 300 may be housed within a single enclosure, or may be separated into functional modules that are combined to provide the functionality of the tool 300.

Examples, not part of the invention, have been discussed in detail in relation to examples in which a titanium based MMC part is produced. Powders suitable for additive manufacturing comprising any combination of materials can be produced according to various embodiments of the disclosure, not part of the invention.

Embodiments of the disclosure, not part of the invention, provide a significant enhancement to additive manufacturing processes, and overcome a number of problems in additive manufacture. For instance, enhancements of around 30% in the hardness of Ti-6A1-4V can be realised.

Embodiments of the invention facilitate greatly improved flexibility in additive layer manufacturing, enabling small batches of material with tailored material composition to be readily prepared, potentially in situ with the tool used to deposit the material to form a part by additive manufacturing.

Various other changes will be apparent to the skilled person. Any such variations are within the scope of the invention, as defined by the appended claims.

## Claims

1. An additive manufacturing tool (300), comprising:

   a first powder holder (11), and a second powder holder (15);
   a blender (30) operable to blend a first powder material from the first powder holder (11) and a second powder material from the second powder holder (15) to form a feedstock powder (200); wherein:

i) the feedstock powder comprises a first particulate component (1) with a first mean particle diameter, and a second particulate component (2) with a second mean particle diameter, wherein the first mean particle diameter is at least twice the second mean particle diameter, and the particles of the second component are bonded to the particles of the first component with a binder material to form a flowable power, and

ii) the blender (30) comprises a binder dispenser for adding the binder material to the powder, and a dryer for drying the powder to form the feedstock powder (200); and

a dispenser, wherein the dispenser is operable to dispense the feedstock powder (200).

2. The additive manufacturing tool (300) of claim 1, further comprising:
a directed heat source (40), operable to sinter or melt the feedstock powder (200) to form a part.

3. The additive manufacturing tool (300) according to claim 1 or 2, wherein the second powder holder (15) comprises at least one container (12, 13), and the blender (30) is configured to blend material from the first powder holder (11) and one or more selected containers of the second powder holder (15) in variable proportions, so as to form a feedstock powder (200) with selectable proportions of different materials.

4. The additive manufacturing tool (300) according to any of claims 1 to 3, wherein the tool (300) is configured to form feedstock powder (200) as it is required by the dispenser.

5. The additive manufacturing tool (300) according to claim 2, or according to claim 3 or to claim 4 in so far as they depend from claim 2, wherein the dispenser is operable to deposit successive layers of the feedstock powder (200) and the directed heat source (40) is operable to produce a solid part by selectively sintering or melting regions of each successive layer, and the tool (300) is operable to vary the composition of the feedstock powder so that different layers have a different composition so as to produce a part with a first region having a first material composition, and a second region having a different material composition, by varying the proportions of the materials in the feedstock powder (200) during production of the part.

**Patentansprüche**

1. Werkzeug für additive Fertigung (300), das Folgendes umfasst:

einen ersten Pulverhalter (11) und einen zweiten Pulverhalter (15);
einen Mischer (30), betreibbar zum Mischen eines ersten Pulvermaterials aus dem ersten Pulverhalter (11) und eines zweiten Pulvermaterials aus dem zweiten Pulverhalter (15) zum Bilden eines Einsatzpulvers (200);
wobei:

i) das Einsatzpulver eine erste Partikelkomponente (1) mit einem ersten mittleren Partikeldurchmesser und eine zweite Partikelkomponente (2) mit einem zweiten mittleren Partikeldurchmesser umfasst, wobei der erste mittlere Partikeldurchmesser mindestens zweimal der zweite mittlere Partikeldurchmesser ist, und wobei die Partikel der zweiten Komponente mit einem Bindemittelmaterial an die Partikel der ersten Komponente gebunden werden, um ein fließbares Pulver zu bilden, und

ii) der Mischer (30) einen Bindemittelspender zum Hinzufügen des Bindemittelmaterials zum Pulver sowie einen Trockner zum Trocknen des Pulvers zum Bilden des Einsatzpulvers (200) umfasst; und

einen Spender, wobei der Spender betreibbar ist, um das Einsatzpulver (200) auszugeben.

2. Werkzeug für additive Fertigung (300) nach Anspruch 1, das ferner Folgendes umfasst:
eine gerichtete Wärmequelle (40), betreibbar zum Sintern oder Schmelzen des Einsatzpulvers (200) zum Bilden eines Teils.

3. Werkzeug für additive Fertigung (300) nach Anspruch 1 oder 2, wobei der zweite Pulverhalter (15) zumindest einen Behälter (12, 13) umfasst, und wobei der Mischer (30) dazu ausgelegt ist, Material aus dem ersten Pulverhalter (11) und einem oder mehreren ausgewählten Behältern des zweiten Pulverhalters (15) in variablen Proportionen zu mischen, um ein Einsatzpulver (200) mit auswählbaren Proportionen von unterschiedlichen Materialien zu bilden.

4. Werkzeug für additive Fertigung (300) nach einem der Ansprüche 1 bis 3, wobei das Werkzeug (300) ausgelegt ist zum Bilden von Einsatzpulver (200), wie es durch den Spender benötigt wird.

5. Werkzeug für additive Fertigung (300) nach Anspruch 2, oder nach Anspruch 3 oder nach Anspruch 4, insoweit sie von Anspruch 2 abhängen, wobei der Spender betreibbar ist, um aufeinander folgende Schichten des Einsatzpulvers (200) abzulagern und wobei die gerichtete Wärmequelle (40) betreibbar ist zum Produzieren eines festen Teils durch gezieltes Sintern oder Schmelzen von Regionen der einzelnen aufeinander folgenden Schichten, und wobei das Werkzeug (300) betreibbar ist zum Variieren der Zusammensetzung des Einsatzpulvers, sodass unterschiedliche Schichten eine unterschiedliche Zusammensetzung aufweisen, um ein Teil mit einer ersten Region, die eine erste Materialzusammensetzung aufweist, und einer zweiten Region, die eine unterschiedliche Materialzusammensetzung aufweist, zu produzieren durch Variieren der Proportionen der Materialien im Einsatzpulver (200) während der Produktion des Teils.

## Revendications

1. Outil de fabrication additive (300), comprenant :

un premier support de poudre (11), et un second support de poudre (15) ;
un mélangeur (30) pouvant fonctionner pour mélanger un premier matériau en poudre provenant du premier support de poudre (11) et un second matériau en poudre provenant du second support de poudre (15) pour former une poudre de charge d'alimentation (200) ; dans lequel :

i) la poudre de charge d'alimentation comprend un premier composant de particules (1) présentant un premier diamètre moyen de particule, et un second composant de particules (2) présentant un second diamètre moyen de particule, dans lequel le premier diamètre moyen de particule fait au moins deux fois le second diamètre moyen de particule, et les particules du second composant sont collées aux particules du premier composant avec un matériau liant pour former une puissance pouvant s'écouler, et
ii) le mélangeur (30) comprend un distributeur de matériau liant destiné à ajouter le matériau liant à la poudre, et un séchoir pour sécher la poudre afin de former la poudre de charge d'alimentation (200) ; et

un distributeur, le distributeur pouvant être utilisé pour distribuer la poudre de charge d'alimentation (200).

2. Outil de fabrication additive (300) selon la revendication 1, comprenant en outre :
une source de chaleur dirigée (40), pouvant être utilisée pour fritter ou faire fondre la poudre de charge d'alimentation (200) pour former une pièce.

3. Outil de fabrication additive (300) selon la revendication 1 ou 2, dans lequel le second support de poudre (15) comprend au moins un récipient (12, 13), et le mélangeur (30) est configuré pour mélanger le matériau du premier support de poudre (11) et d'un ou de plusieurs récipients sélectionnés du second support de poudre (15) dans des proportions variables, de manière à former une poudre de charge d'alimentation (200) avec des proportions sélectionnables de différents matériaux.

4. Outil de fabrication additive (300) selon l'une quelconque des revendications 1 à 3, l'outil (300) étant configuré pour former la poudre de charge d'alimentation (200) selon les exigences du distributeur.

5. Outil de fabrication additive (300) selon la revendication 2, ou selon la revendication 3 ou selon la revendication 4 dans la mesure où elles dépendent de la revendication 2, le distributeur pouvant être utilisé pour déposer des couches successives de la poudre de charge d'alimentation (200) et la source de chaleur dirigée (40) pouvant être utilisée pour produire une pièce solide en frittant ou en fondant sélectivement des zones de chaque couche successive, et l'outil (300) étant utilisable pour faire varier la composition de la poudre de charge d'alimentation de sorte que différentes couches aient une composition différente afin de produire une pièce avec une première zone ayant une première composition de matériaux, et une seconde région ayant une composition de matériaux différente, en faisant varier les proportions des matériaux dans la poudre de charge d'alimentation (200) pendant la production de la pièce.

Figure 1

Figure 2

Figure 3

Figure 4

Figure 5

Figure 6

Figure 7

Figure 8

Figure 9

**EP 3 046 701 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004009089 A1
- US 2004182202 A1
- EP 1700686 A2